# EUROPEAN PATENT APPLICATION

(11) **EP 1 843 088 A2**
(43) Date of publication of application: **10.10.2007**
(21) Application number: 07251376.5
(22) Date of filing: 29.03.2007
(51) Int. Cl.: F21V 29/02, G02B 6/42, G02B 6/00, A61B 1/07

(54) **Lighting apparatus and holder means for use with lighting apparatus**

(30) Priority: 06.04.2006 GB 0606940
(71) Applicant: Optident Limited, Ilkley LS29 8 PB (GB)
(72) Inventor: Fowler, James Andrew, Ilkley West Yorkshire LS29 8AL (GB)
(74) Representative: Tomkinson, Alexandra

(57) **Abstract**

Holder means are provided for use with lighting apparatus. The lighting apparatus includes a housing (4) with a light source (6) provided therein and fibre optic means associated with said light source (6) for allowing light from said light source (6) to pass along said fibre optic means to a location remote from said light source. The holder means includes at least first location means (26,42) for locating at least part of the fibre optic means therewith in use and at least second location means (28,38) for locating at least a part of the light source therewith in use. The at least first (26,42) and second location means (28,38) are provided a spaced distance apart to position the light source and fibre optic means at a predetermined distance to each other in use and are arranged such that light from said light source can be directed into said fibre optic means.

## Description

This invention relates to lighting apparatus and holder means for use with lighting apparatus.

Although the following description refers almost exclusively to lighting apparatus and holder means for use in lighting apparatus commonly called a "loupe light" for use with high magnification glasses or viewers called "loupes" which are used in surgery or dentistry, it will be appreciated by persons skilled in the art that the lighting apparatus and/or holder means of the present invention can be used in any suitable application, such as for example by jewellers, watch craftsmen or other tradesmen that view objections under magnification.

Dental loupe lights are used to provide a directed source of light in a patient's mouth to aid the dentist when performing dental treatment. The dental loops typically comprise a lighting device including a housing with a lamp contained therein which is powered by mains power supply. A fibre optic bundle runs from the lamp to a pair of high magnification loupes worn by the dentist and the outlet end of the bundle is positioned on the glasses so as to direct a focused beam of light into the patient's mouth. The housing of the lighting device is typically secured to a bench adjacent the dentist. A problem associated with known dental loupe lights is that since the device is fixed, typically due to its size and design, the movement of the user is restricted. In addition, the fibre optic bundle often impedes the user and can become damaged. In addition, the heat generated from the lighting device housing could injure the user if they became too close to it.

It is therefore an aim of the present invention to provide a lighting apparatus which has greater flexibility and/or which has increased cooling potential.

It is a further aim of the present invention to provide holder means for use with lighting apparatus.

According to a first aspect of the present invention there is provided holder means for use with lighting apparatus, said lighting apparatus including a housing with a light source provided therein and fibre optic means associated with said light source for allowing light from said light source to pass along said fibre optic means to a location remote from said light source, and wherein said holder means includes at least first location means for locating at least part of the fibre optic means therewith in use and at least second location means for locating at least a part of the light source therewith in use, the at least first and second location means being provided a spaced distance apart to position the light source and fibre optic means at a pre-determined distance to each other in use and arranged such that light from said light source can be directed into said fibre optic means.

The holder means is typically a single integral unit which allows the light source and fibre optic means to be located relative to each other in a required position and relative to a housing in which the holder means is located in use in a required position.

Preferably the holder means are positioned in said housing so as to be a spaced distance apart from one or more and preferably all of the interior/exterior or outer walls of said housing, thereby preventing heat from the holder means passing directly to the walls of said housing and thus to a user who may come into contact with said housing. The gap typically allows cooling air to flow around said holder means. Thus, the housing of the lighting apparatus is typically at least partially thermally decoupled from the light source contained therein.

This allows the housing to be worn on or adjacent the user without injuring the user.

In one embodiment the housing is associated with a belt, necklace arrangement, bum bag, head band, arm band, back pack, article of clothing and/or the like to allow the housing to be worn by a user. Thus, the lighting device of the present invention is readily transportable/portable and lightweight.

In one embodiment the at least first and/or second location means includes any or any combination of one or more apertures, recesses, channels and/or slots.

The first location means for location of the fibre optic means therewith in use is typically associated with a front surface of the holder means and the at least second location means for the location of the light source therewith in use is typically associated with a rear surface of the holder means. Preferably the at least first and second location means are located substantially opposite to each other.

The fibre optic cable typically has a light receiving end which is opposite to the light emitting end. The light receiving end is located with the first location means in use. The pre-determined space provided between the light source and the fibre optic cable allows the fibre optic cable to be at least partially thermally decoupled from the light source in use.

Preferably the holder means has one or more further location means for the location or attachment of one or more filters, filter devices, fan means, one or more electronic components, printed circuit boards (PCBs) and/or the like.

The filter location means are preferably defined between the at least first and second location means so that light passes from the light source through one or more filters located in said filter location means prior to passing along said fibre optic means.

In one embodiment the fan location means are defined laterally of said first and/or second location means. Preferably the fan location means are located in a front surface of the holder means.

Preferably the PCB and/or electronic component location means is defined in a top surface of the holder means. This allows at least a portion of a PCB or electronic component to be located therein in use.

Preferably the holder means includes cooling means, such as for example one or more channels for the flow of air therethrough. The one or more channels can have at least a first opening defined in an outer wall of the holder means and at least a second opening defined at or adjacent the at least first, second and/or further location means. The cooling means allows the housing to be self-cooling so that the temperature of the housing does not exceed a desired upper limit without necessarily requiring a powered cooling source.

In one embodiment the one or more channels has an air inlet adjacent an exterior surface of said holder means and an air outlet adjacent a surface of the light source or second location means in which at least part of the light source is located in use. Cool air travels along the channel from said inlet to said outlet to cool the air surrounding the light source. The channel can be provided at an acute angle or sloped to ensure cool air is directed onto a pre-determined position onto and/or adjacent said light source if required.

The fan means typically allows cooling air to be circulated in the housing and/or holder means and for heated air to be removed from said housing and/or holder means. The fan means can be any air moving means which creates a negative pressure differential.

Preferably the lighting device and/or holder means includes temperature measuring means for measuring the ambient air surrounding the holder means and/or for measuring the temperature of the housing and/or holder means. Processing means typically controls the fan in response to the measured temperature. A closed loop system is typically formed in the device, such that a change in temperature controls the speed of the fan means.

A filter device can be provided which is movably mounted to said holder means and/or movable relative to said holder means. The filter device typically allows one or more filters to be moved relative to said light source as required.

In one embodiment a filter device is rotatably mounted to said holder means. A slot can be provided in the holder means and the filter device to be located at least partially in said slot.

Preferably the axis of rotation of said filter device is between the front and rear surface of said holder means.

One or more filters can be fixedly attached to said holder means. The filters are preferably located in said further location means.

The one or more filters can include any or any combination of an Ultraviolet (UV) filter, Infra Red (IR) filter, orange filter to filter out blue light, polarizer filter, wavelength filter, long-pass filter, short-pass filter, tunable filter and/or the like.

Preferably the light source located with the second location means of the holder means in use includes one or more halogen lights or high intensity discharge (HID) lights. A HID light in conjunction with fibre optics and focusing optics typically provides a single defined beam which does not dazzle either the patient or user.

The fibre optic means can include a single fibre, a fibre bunch or a plurality of fibre bundles as required. The length of the fibre optic means is sufficient to allow it to pass from the housing of the lighting device to a frame, pair of glasses worn by the user, adjacent the patient and/or the like.

In a preferred embodiment randomised fibre optic bundles are used since they provide substantially uniform light therefrom. Split bundles can also be used since this eliminates reflection back towards the user's eye.

Attachment means can be associated with the fibre optic means and/or to allow attachment of the same at one or both ends to the housing and vision/reading glasses, frame and/or the like. The attachment means can include a friction fit arrangement, adhesive, welding, one or more clips, ties, inter-engaging members, screw threads and/or the like.

The lighting apparatus, and more particularly the light source, is typically powered by one or more batteries, thereby allowing the device to be easily transportable. The housing has a cavity or compartment defined therein for the location of said one or more batteries. Connection means can be provided to allow the lighting apparatus to be connected to a mains power supply or other power source if required.

Recharging means can be associated with said housing to allow said one or more batteries to be recharged.

In one embodiment a lens housing is associated with an output end of the fibre optic means to allow one or more lens to be used with the light emitted from the fibre optic means. The lens housing can include engagement means for engaging said fibre optic means thereto. The engagement means also ensures the fibre optic means are located a pre-determined distance from the one or more lenses used in the lens housing.

Preferably the housing includes one or more slots and/or apertures to allow air to circulate through said housing. Further preferably these slots and/or apertures are aligned with the fan means of the holder means.

Preferably the lighting apparatus is in the form of a dental loupe.

According to a second aspect of the present invention there is provided lighting apparatus, said lighting apparatus including a housing with a light source provided therein and fibre optic means associated with said light source for allowing light from said light source to pass along said fibre optic means to a location remote from said light source, and wherein holder means are provided in said housing including at least first location means for locating at least part of the fibre optic means therewith in use and at least second location means for locating at least a part of the light source therewith in use, the at least first and second location means being provided a spaced distance apart to position the light source and fibre optic means at a pre-determined distance to each other in use and arranged such that light from said light source can be directed into said fibre optic means.

The holder means can be supplied alone or can be supplied with the light source, fibre optic means and/or other components attached to the holder means.

According to separate independent aspects of the present invention there is provided a housing; a lens housing; and a filter device.

An embodiment of the present invention will now be described with reference to the accompanying figures, wherein:

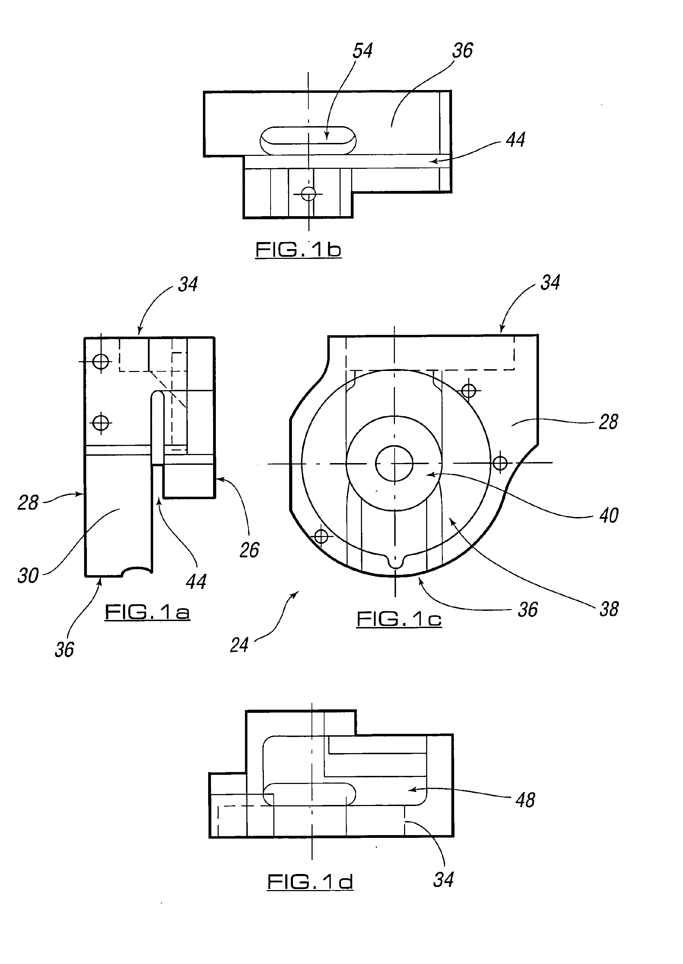

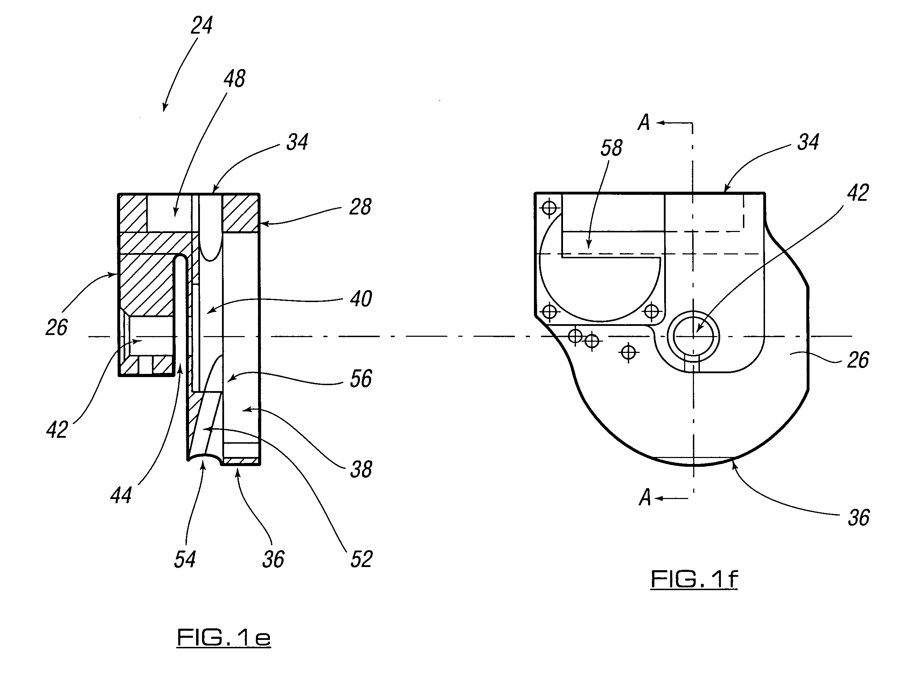

Figures 1a-1f illustrate a side view, base view, first end view, top view, cross sectional view taken along line A-A in figure 1f and a second end view of the holder means respectively;

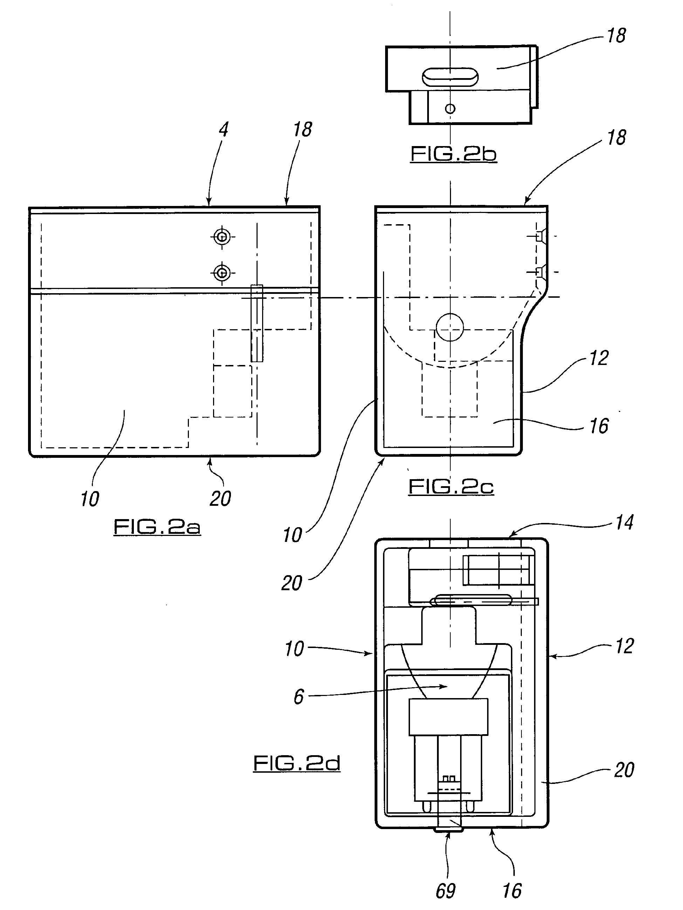

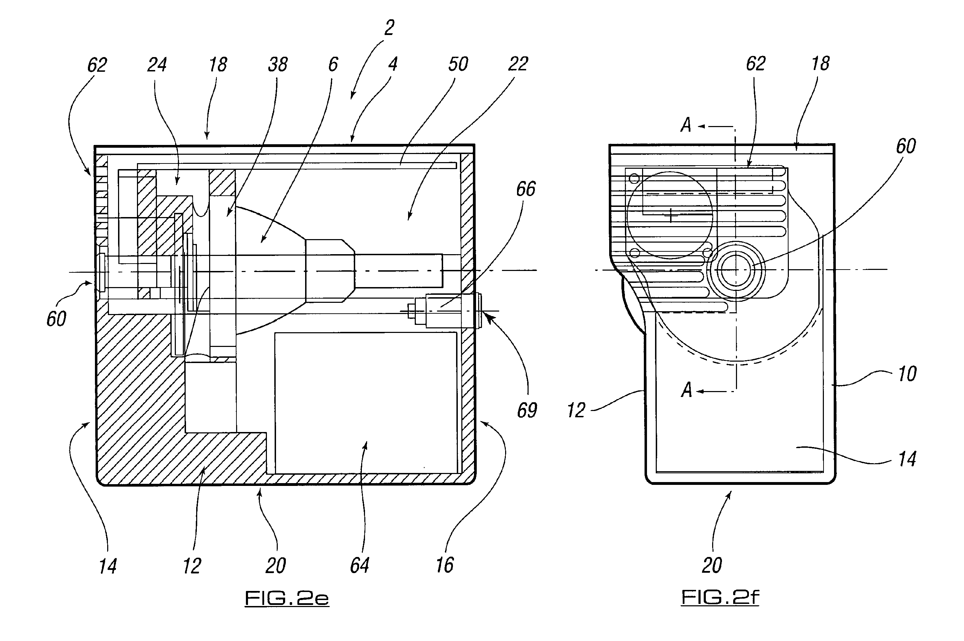

Figures 2a-2f illustrate a side view, top view, first end view, base view, cross sectional view taken along line A-A in figure 2f and a second end view of the housing and holder means respectively;

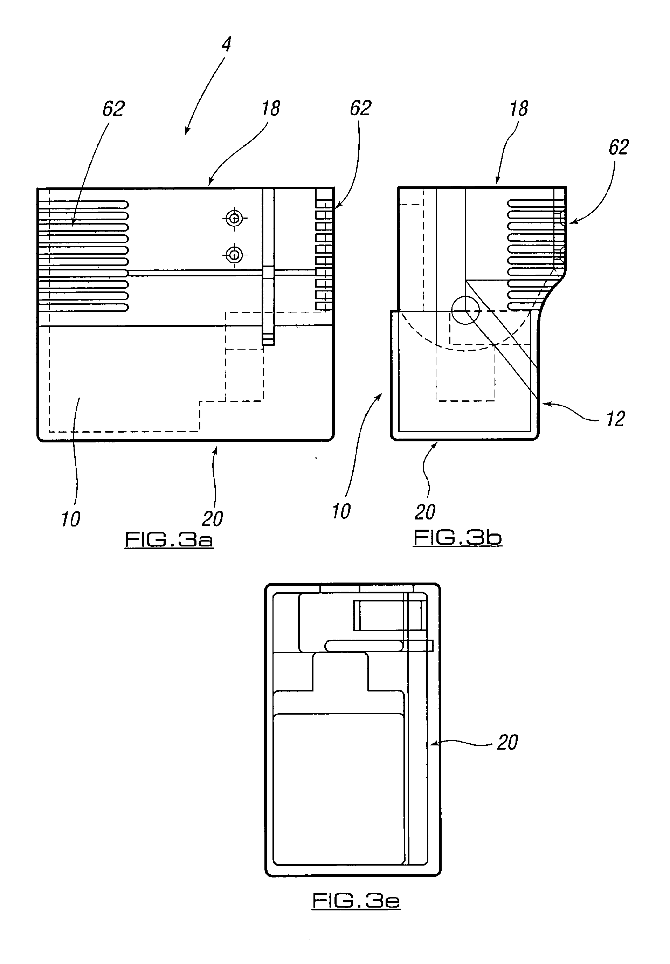

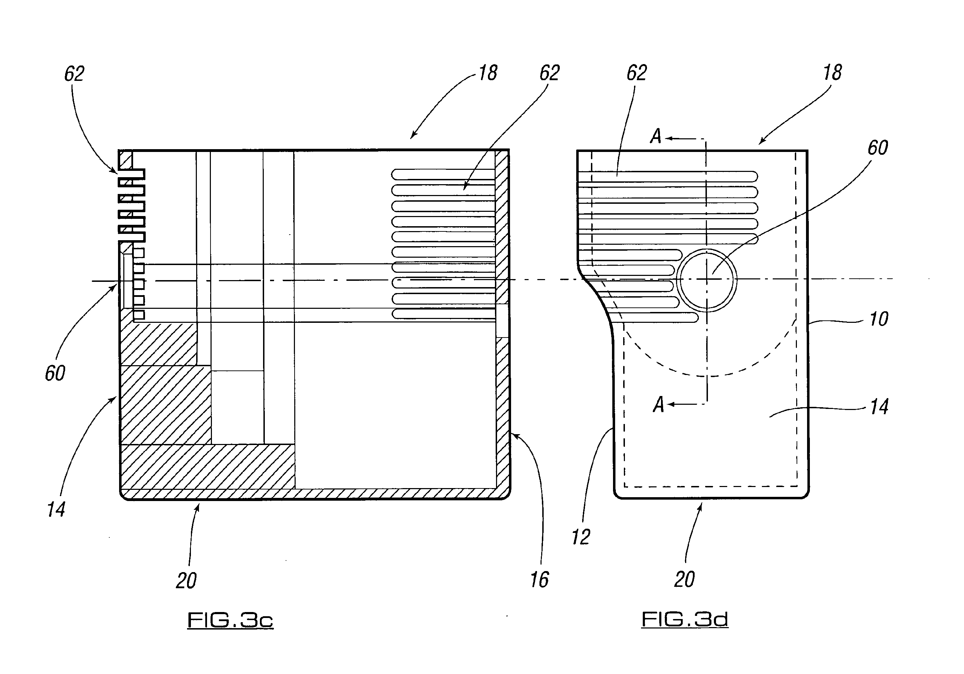

Figures 3a-3e illustrate a side view, first end view, cross sectional view taken along line A-A in figure 3d, second end view and base view respectively;

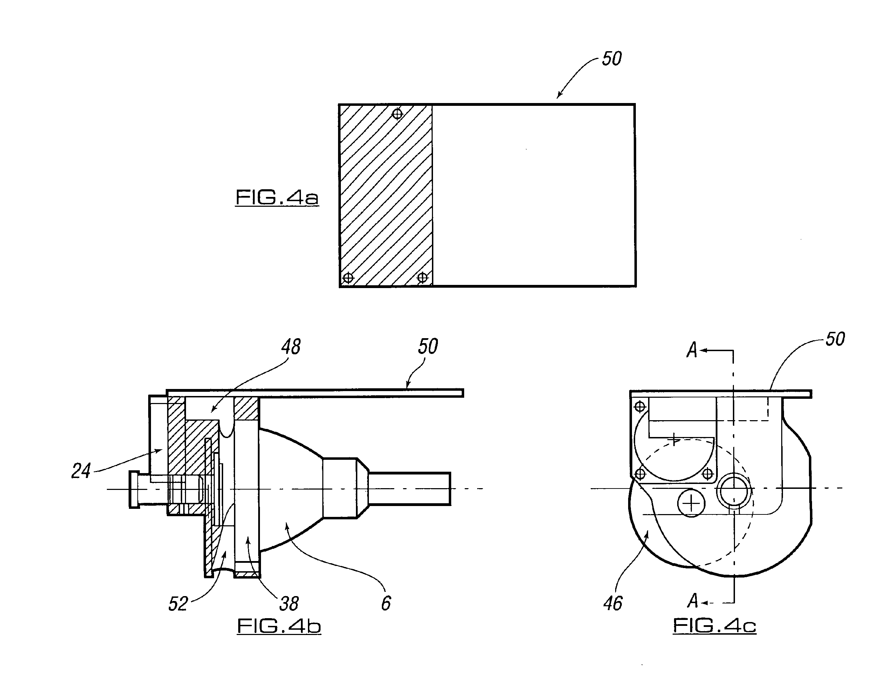

Figures 4a-4c illustrate a plan view, side view and end view of the printed circuit board (PCB) associated with the holder means respectively;

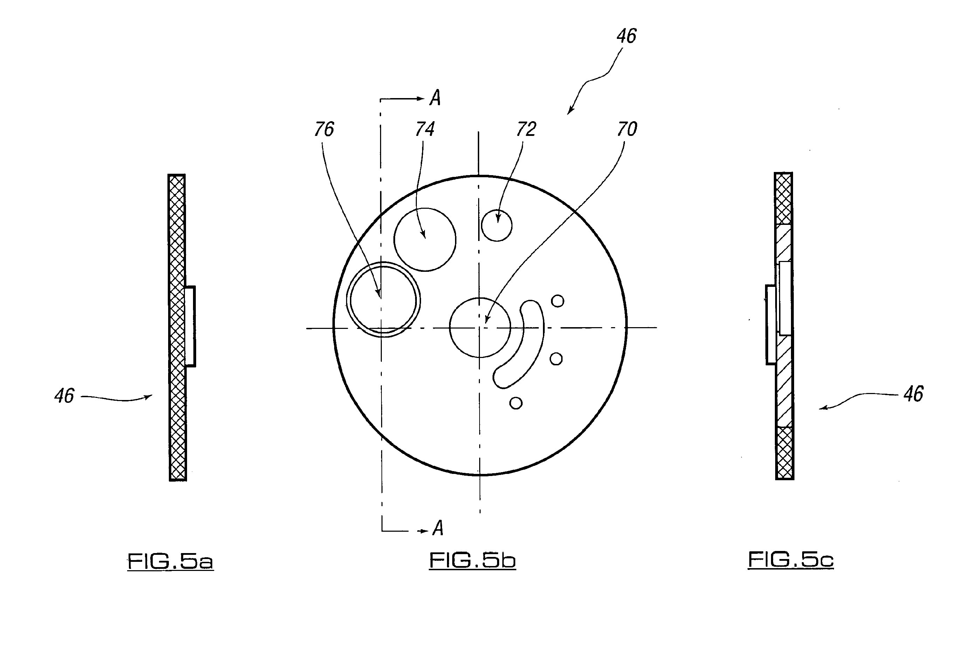

Figures 5a-5c illustrate a side view, front view and cross sectional view taken along line A-A in figure 5b of a filter wheel for use with the present invention respectively; and
Figures 6a-6c illustrate a first end view, cross sectional view taken along line A-A in figure 6c and second end view of a lens assembly respectively.

Referring to the figures, there is illustrated a lighting device 2 known as a dental loupe light which provides an easily transportable light source for attachment to high magnification loupes (not shown) used in dentistry or surgery in one example.

The lighting device 2 includes a housing 4 containing a light source in the form of a HID lamp 6. A first end of a fibre optic bundle (not shown) communicates with the lamp 6 in housing 4 and a second end of the fibre optic is attached adjacent the glasses to direct light onto a required location being viewed by a user wearing the glasses, such as into a patients mouth.

Housing 4 has side walls 10, 12, end walls 14, 16, top 18 and base 20. A cavity 22 is defined in housing 4 and holder means in the form of a single integral lamp holder 24 is located in said cavity.

Lamp holder 24 has a first end 26, second end 28, side walls 30, 32, a top 34 and base 36. Second end 28 has a recess 38 defined therein for the location of a front end of lamp 6 therein. In front of recess 38 is a further recess 40 for the location of one or more filters, such as an ultraviolet (UV) and infra red filter (not shown). The recess 40 opens out adjacent the base 36 and/or sides 14,16 of the holder.

An aperture 42 is defined in first end 26 for the location of an end of a fibre optic bundle (not shown). The fibre optic bundle can be secured in aperture 42 via any suitable engagement means, such as friction fit, adhesive, one or more clips, ties, inter-engaging members and/or the like. Aperture 42 is located substantially opposite to recess 38, such that light emitted from lamp 6 when located in recess 38 will pass along the fibre optic bundle. In the illustrated embodiment, aperture 42 is substantially smaller than aperture 38 in which the front end of lamp 6 is located in use.

A slot 44 is provided between aperture 42 and further recess 40 and at least partially aligned therewith for the location of a filter wheel 46 therein which will be discussed in more detailed below.

A recess 48 is defined in top wall 34 of lamp holder 24 for the location of a printed circuit board (PCB) 50 in use. The PCB has a temperature sensor provided thereon for allow the temperature of the lamp holder 24 and/or air surrounding said lamp holder to be measured. The temperature sensor communicates with a fan to switch the fan on/off or to control the speed of the fan depending on the measured temperature. As such, the cooling system used in the lighting device of the present invention is a closed loop system.

A channel 52 is provided with an inlet 54 defined in base 36 and an outlet 56 defined adjacent recess 38. Channel 52 allows cool air to be transported adjacent the front of lamp 6 to cool the same down in use.

The fan (not shown) is located in lamp holder 24 adjacent first end 26 in position 58 and allows cool air to be drawn through channel 52 and to be circulated around the lamp holder in use. The fan is offset or laterally located relative to aperture 42.

The lamp holder 24 is positioned in housing 4 so as to be a spaced distance apart from the outer walls of the housing, thereby preventing heat from the lamp holder passing directly to the exterior walls of the housing and causing injury to a user. More particularly, lamp holder 24 is located a spaced distance apart from but adjacent to the top 18 of the housing, such that PCB 50 is substantially parallel to top wall 18 and a spaced distance apart therefrom. Fibre optic aperture 42 of holder 24 is located adjacent end wall 14 and substantially aligned with aperture 60 defined in wall 14 of housing 4 to allow a fibre optic bundle to pass out of housing 4.

The lamp holder can be secured in housing 4 via any suitable means, such as one or more screws, clips and/or the like. The lamp holder can also be suspended from a partition wall located in the housing if required.

A plurality of venting slots 62 are provided in end walls 14, 16 of the housing to allow cool air to circulate through housing 4 and for warm air to be exhausted from said housing. The cooling system of the present invention allows the lighting device to be worn on or adjacent a user without injuring the user.

Cavity 22 in housing 4 is also shaped so as to contain a battery pack 64. A battery recharger unit 66 communicates with battery pack 64 and has a socket arrangement 69 located in end wall 16. Since the device is battery powered, this allows the device to be easily carried by a user and does not restrict the user to use in a particular location.

A filter wheel 46 can be rotatably mounted in lamp holder 24 and can be rotated about central axis 70 (i.e. an axis passing from front surface 26 to rear surface 28 of holder 24.) The filter can allow a plurality of possible filters to be moved between lamp 6 and the fibre optic bundle. In the illustrated example, filter wheel 46 has a first aperture 72 for the passage of light therethrough from lamp 6 without any filter. A second aperture 74 is provided for a neutral density filter to allow dimming of the light emitted from lamp 6. A third aperture 76 is provided for the location of an orange filter for filtering out blue light emitted from lamp 76. This filter is used for dental composite work. Other filters could be used as required.

Actuation means are associated with the housing to allow a user to move between the different filters by rotating the filter wheel as required.

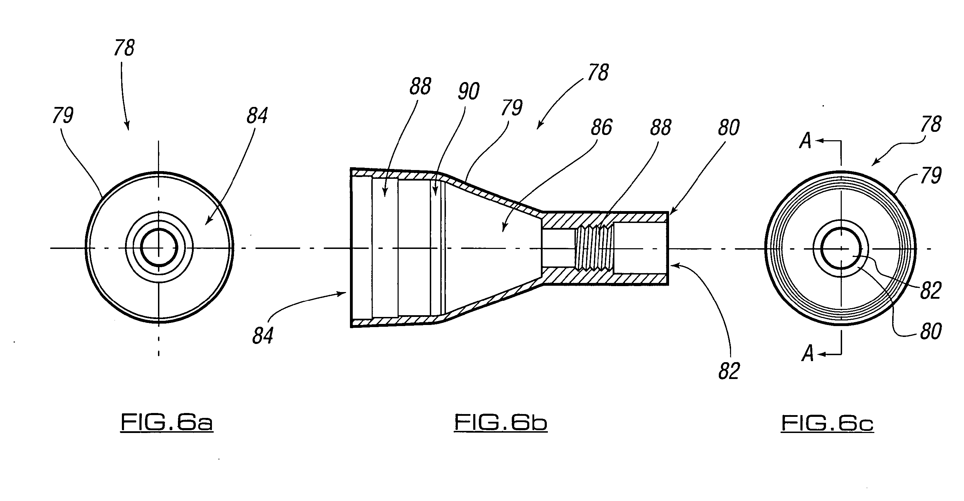

At the end of the fibre optic bundle opposite to the end attached to the lamp holder, a lens housing 78 is provided, as shown in figures 6a-6c. Lens housing 78 has side walls 79, a first end 80 with an aperture 82 defined therein for the location of the end of the fibre optic bundle therethrough, and a second end 84 which is directed towards the patient in use. A channel 86 links first end 80 to second end 84.

Attachment means in the form of a screw thread 88 are provided on the interior wall of the lens housing at a pre-determined position in channel 86 to allow attachment of the end of the fibre optic bundle thereto. This also ensures the fibre optic bundle is a required focal distance from the one or more lenses.

Lens location recesses 88, 90 are defined in channel 86 towards end 84 for the location of focal lenses as required. For example, a meniscus lens and a biconvex lens can be used in the lens housing. The focal lenses allow the light emitted from the fibre optic bundle to be focused into a required size of light beam.

Engagement means can be associated with the lens housing to allow attachment of the same to a pair of glasses or to a frame.

The housing 4 of the lighting device is typically worn on the user in use, such as around the user's neck or waist using a belt or other suitable means of attachment. As such, the lighting device of the present invention is lightweight and easily transportable.

The components of the housing and lamp holder can be provided in any suitable size, shape and/or design and can be formed from any suitable material, such as metal, plastic, wood and/or the like.

## Claims

1. Holder means for use with lighting apparatus, said lighting apparatus including a housing with a light source provided therein and fibre optic means associated with said light source for allowing light from said light source to pass along said fibre optic means to a location remote from said light source, and wherein said holder means includes at least first location means for locating at least part of the fibre optic means therewith in use and at least second location means for locating at least a part of the light source therewith in use, the at least first and second location means being provided a spaced distance apart to position the light source and fibre optic means at a pre-determined distance to each other in use and arranged such that light from said light source can be directed into said fibre optic means.

2. Holder means according to claim 1 wherein the at least first and/or second location means includes any or any combination of one or more recesses, apertures, channels or slots.

3. Holder means according to claim 1 wherein the at least first location means is associated with a front surface of the holder means and the at least second location means is associated with a rear surface of the holder means.

4. Holder means according to claim 3 wherein the at least first and second location means are located substantially opposite to each other.

5. Holder means according to claim 1 wherein one or more further location means are defined therein for the location or attachment of one or more filters, fan means, one or more electronic components and/or printed circuit boards (PCBs) in use.

6. Holder means according to claim 5 wherein the filter location means are defined between the first and second location means.

7. Holder means according to claim 6 wherein the fan location means are defined laterally of said first and/or second location means.

8. Holder means according to claim 7 wherein the fan location means are defined in a front surface of the holder means.

9. Holder means according to claim 5 wherein the PCB and/or electronic component location means are defined in a top surface of the holder means.

10. Holder means according to claim 1 wherein cooling means are associated therewith.

11. Holder means according to claim 10 wherein said cooling means includes one or more channels defined in said holder means, said one or more channels having at least a first opening defined in an outer wall of said holder means and at least a second opening defined at or adjacent the at least first, second and/or further location means.

12. Holder means according to claim 11 wherein the one or more channels are provided at acute angles or sloped to allow air flow to be directed onto a pre-determined surface or position.

13. Holder means according to claim 1 wherein any or any combination of temperature measuring means, fan, filters, electronic components and/or printed circuit board are associated with the holder means.

14. Holder means according to claim 13 wherein the temperature measuring means measures the temperature of the ambient air surrounding the holder means and processing means controls the fan in response to the measured temperature.

15. Holder means according to claim 1 wherein a filter device is movably mounted on said holder means.

16. Holder means according to claim 15 wherein the filter device is rotatably mounted to said holder means.

17. Holder means according to claim 13 wherein the one or more filters associated with the holder means includes an Ultraviolet filter, an Infra-red filter and/or an orange filter.

18. Holder means according to claim 1 wherein a light source is located with the second location means and said light source is a high intensity discharge light.

19. Holder means according to claim 1 wherein fibre optic means are located with the first location means and said fibre optic means is a single fibre, a fibre bunch or a plurality of fibre bunches.

20. Lighting apparatus, said lighting apparatus including a housing with a light source provided therein and fibre optic means associated with said light source for allowing light from said light source to pass along said fibre optic means to a location remote from said light source, and wherein holder means according to claim 1 are provided in said housing.

21. Lighting apparatus according to claim 20 wherein the holder means is located in said housing so as to be a spaced distance apart from outer walls of said housing.

22. Lighting apparatus according to claim 20 wherein the housing is associated with a belt or necklace to allow the housing to be worn by a user.

23. Lighting apparatus according to claim 20 wherein the fibre optic means is of sufficient length to pass from the housing to a frame or pair of vision glasses remote from the housing.

24. Lighting apparatus according to claim 23 wherein attachment means are associated with the fibre optic means to allow attachment of the same to the frame or glasses.

25. Lighting apparatus according to claim 24 wherein the attachment means includes any or any combination of a friction fit, adhesive, welding, one or more clips, ties, inter-engaging members or screw threads.

26. Lighting apparatus according to claim 20 wherein the light source is powered by one or more batteries located in the housing.

27. Lighting apparatus according to claim 26 wherein recharging means are associated with the housing to allow recharging of the batteries.

28. Lighting apparatus according to claim 20 wherein the end of the fibre optic means remote from the housing is provided with a lens housing.

29. Lighting apparatus according to claim 28 wherein one or more recesses are defined in said lens housing for the location of one or more lenses therein.

30. Lighting apparatus according to claim 20 wherein one or more apertures and/or slots are defined in the housing to allow air to circulate through said housing.

31. Lighting apparatus according to claim 20 wherein said apparatus is portable.

32. Lighting apparatus according to claim 20 in the form of a dental loupe.
